# EUROPÄISCHE PATENTANMELDUNG

(11) **EP 1 134 675 A2**
(43) Veröffentlichungstag der Anmeldung: **19.09.2001**
(21) Anmeldenummer: 01106028.2
(22) Anmeldetag: 12.03.2001
(51) Int. Cl.: G06F 17/50

(54) **Verfahren zur Simulation und/oder Planung einer Tragschienenbestückung**

(30) Priorität: 16.03.2000 DE 10012711
(71) Anmelder: Weidmüller Interface GmbH & Co., 32760 Detmold (DE)
(72) Erfinder: Becker, Ulrich, 32760 Detmold (DE); Menke, Dirk, 37688 Beverungen (DE)
(74) Vertreter: Specht, Peter, Dipl.-Phys.

(57) **Zusammenfassung**

Bei einem Verfahren zur Simulation und/oder Planung einer Tragschienenbestückung, bei dem mittels einer Softwareroutine die Bestückung einer Tragschiene mit Reihenklemmen und/oder weiteren Elementen und/oder Geräten simuliert wird und auf einer Ausgabeeinrichtung, vorzugsweise einem Bildschirm, einer Recheneinheit dargestellt wird, werden die einzelnen Reihenklemmen und/oder weiteren Elemente und/oder Geräte nicht als Grafik sondern direkt als Abbildung einer Datenstruktur aus Einzel(Token)Elementen auf der Tragschiene abgebildet (Figur 3).

## Beschreibung

Die Erfindung betrifft ein Verfahren zur Simulation und/oder Planung einer Tragschienenbestückung, bei dem mittels einer Softwareroutine die Bestückung einer Tragschiene mit Reihenklemmen und/oder weiteren Elementen und/oder Geräten simuliert wird und auf einer Ausgabeeinrichtung, vorzugsweise einem Bildschirm, einer Recheneinheit dargestellt ist.

Bekannte Verfahren zur photorealistischen Darstellung von Tragschienenbestückungen nutzen während der Planungsphase eine Liste, in weichere gearbeitet wird und erzeugen dann nach dem Beenden der Planungsphase aus der fertigen Listen eine Graphik. Während der Entwurfs- und Planungsphase kann daher nicht mit der Graphik gearbeitet bzw. editiert werden. Nur Symbole in der Liste geben Aufschluß über den verwendeten Artikel.

Die meisten bestehenden Systeme sind daher relativ umständlich und vereinfachen die Planungsphase nicht genug, da sie nicht variabel genug aufgebaut sind. Es ist daher die Aufgabe der Erfindung, die Darstellung der Tragschienenbestückung am Bildschirm zu vereinfachen.

Die Erfindung löst diese Aufgabe durch den Gegenstand des Anspruches 1. Die Erfindung bzw. daß mit ihr realisierbare Programm zeichnen sich dadurch aus, daß die einzelnen Reihenklemmen und/oder weiteren Elemente und/oder Geräte (nicht als eigentliche Graphik) sondern direkt als Abbildung einer Datenstruktur aus Einzel(-Token)Elementen auf der Tragschiene abgebildet werden. Der wesentliche Vorteil dieser Ausgestaltung besteht darin, daß dadurch, daß die Elemente der Bildschirmanzeige "objektorientiert" intelligent wird, ein flexibleres, nicht starres System geschaffen wird, das die Planung von Tragschienenbestückungen deutlich vereinfacht, da auch während der Planungsphase die Editierbarkeit in der graphischen Tragschienensimulation gewährleistet ist. Das Prinzip entspricht damit sehr viel eher dem Aufbauen und Montieren einer Tragschiene aus Bauelementen in der Praxis.

Vorteilhafte Ausgestaltungen der Erfindung sind in den Unteransprüchen angegeben.

Vorzugsweise erfolgt die Darstellung der Reihenklemmen und/oder weiteren Elemente und/oder Geräte auf dem Bildschirm photorealistisch. Dabei werden die Klemmen-Einzelelemente in einer Datenbank abgespeichert und beim Simulieren des Aufrastens der Reihenklemme auf die Tragschiene aus der Datenbank nacheinander aus der Datenbank ausgelesen und auf dem Bildschirm dargestellt.

Vorzugsweise wird in einem Speicher ein Speicherbereich für ein darzustellendes Produkt reserviert, woraufhin aus einer Datenbank notwendige Informationen ausgelesen, interpretiert und als kleinstmögliches grafisches Element auf dem Bildschirm angezeigt werden, wobei jedes Einzelelement eines der Token darstellt. Dabei werden vorzugsweise jedem Token veränderliche Eigenschaften zugewiesen.

Nachfolgend wird die Erfindung - auch unter Bezug auf die Zeichnung - näher beschrieben. Es zeigt:
- Fig. 1: eine Abbildung eines mit der Erfindung erzeugbaren Bildschirminhalts;
- Fig. 2: ein Artikelauswahlfenster;

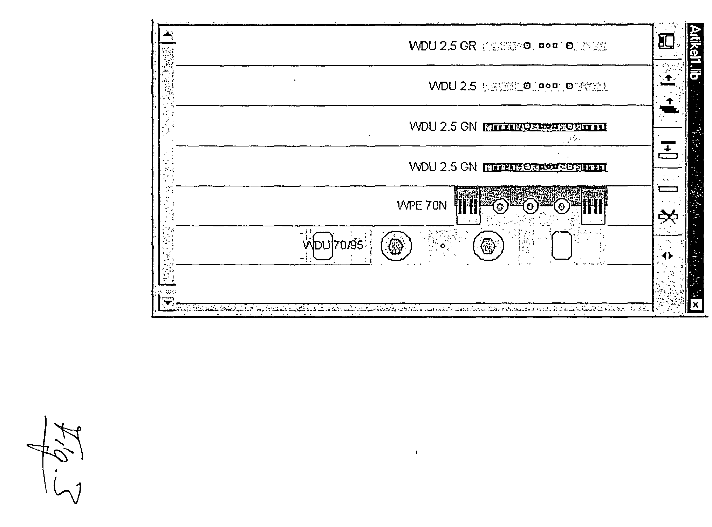

- Fig. 3: eine Ansicht einer Artikelbibliothek;
- Fig. 4: eine Darstellung eines Tokens.

Bei der Projektierung und Erstellung einer elektrischen Anlage sind verschiedene Stufen zu durchlaufen.
- Planungsphase - Projektdefinition
- Konstruktionsphase - Umsetzung der Plandaten in einem CAD/CAE System (falls vorhanden) oder auf Papier
- Wirtschaftlichkeitsphase (Kaufmännische Organisation)
- Realisierungsphase (Umsetzung)
- Implementierungsphase (Einführung der Anlage)

Zwischen den einzelnen Phasen eines Projekts werden immer wieder Daten ausgetauscht, verändert und wieder weitergegeben. Die Art zur Übermittlung der Daten ist dabei sehr unterschiedlich. Fax und Telefon stehen an erster Stelle. Die Übertragungsmedien wie Telefax und Telefon sind aber relativ umständlich, da beim Eintreffen eines Telefaxes eine erneute Datenaufnahme nötig ist, obwohl die Daten beim Kunden möglicherweise bereits in Datenform vorliegen. Bei der Fax- oder Telefonübermittlung können zudem leicht Übertragungsfehler auftreten. Werden Teile des Projektes z.B. mit externen Partnern abgewickelt, ist es von höchster Wichtigkeit, die Details eindeutig zu übermitteln. Fehler bei der Übermittlung sind fatal. Sie führen zu einem erhöhten Aufwand bei der Klärung während der Wirtschaftlichkeitsphase. Die Angebotserstellung wird somit unnötig hinausgezögert.

Das folgende Beispiel beschreibt den Ablauf zur Produktion einer im Projekt benötigten Klemmenleiste mit einem externen Partner:

### Beispiel-Ablauf 1

- Der Kunde erfaßt die individuellen Klemmenleisten mit Hilfe eines Kataloges
- Übermittlung der Klemmenleistendaten per Fax oder Post
- Erfassung und Bewertung der übermittelten Daten und telefonischer Rücksprache mit dem Endkunden
- Manuelle Eingabe der Daten in das vorhandene Warenwirtschaftssystem
- Kalkulation der Klemmenleisten und deren Montage
- Festlegung eines Abgabepreises
- Angebotserstellung
- Auftragsbestätigung des Kunden
- Erstellung der Klemmenleiste auf Basis der übermittelten Fax-Daten.

Eine erhebliche Verbesserung des Work-Flows kann durch den Einsatz von intelligenten Software-Produkten und dem Einsatz der neuen technischen Möglichkeiten (E-Mail, FTP, Web-Browser) erreicht werden.

Folgende Vorteile ergeben sich daraus:
- Verlustfreie Übermittlung oder Weitergabe der Projektdatei
- Nachträgliche Bearbeitungsmöglichkeiten der Projektdateien
- Zeitersparnis in allen Phasen der Projektbearbeitung bei Auftraggeber bzw. Auftragnehmer bis zur Fertigstellung der Klemmenleiste
- Örtliche Unabhängigkeit
- Minimierung der Fehlerquellen

Der Ablauf des Beispiels 1 erfordert einen sehr hohen Personalaufwand. Durch die ständigen telefonischen Nachfragen bis zur kompletten Klärung des Auftrags kann eine Angebotserstellung einige Tage oder Wochen in Anspruch nehmen. Durch den Einsatz der Erfindung ergibt sich dagegen bevorzugt folgender Ablauf:

Die Projektdatei wird zu Beginn des Projekts erstellt und von Phase zu Phase weitergeleitet.
- Der Planer und Konstrukteur erstellt den notwendigen Stromlaufplan
- Die Daten werden vom Konstrukteur in den Rail-Designer importiert
- Übermittlung der Klemmenleistendaten direkt per E-mail
- Automatisierte Datenerfassung im Warenwirtschaftssystem
- Automatische Kalkulation der Klemmenleisten und deren Montage
- Festlegung eines Abgabepreises und automatische Angebotserstellung
- Assemblieren der Klemmenleiste mit Unterstützung der Software am Arbeitsplatz

Die Hauptaufgabe des erfindungsgemäßen Verfahrens (auch Rail-Designer genannt) ist die Optimierung des Work-Flows bei der Projektierung, Bestellung und Montage von Klemmenleisten auf elektronischem Weg. Bei der Bedienbarkeit wurde dabei höchster Wert auf die originale Abbildung der realen und der virtuellen Welt gelegt.

Die Erfindung schafft ein interaktives Projektierungs- und Bestellprogramm für Klemmenleisten (Offline e-commerce System). Eine Besonderheit der Erfindung ist der Art und Weise zu sehen, in der eine Klemmenleiste virtuell bestückt werden kann.

Im Programm wird zu jeder Zeit die Praxis abgebildet. Die Klemmen werden aus einer "Box" entnommen und auf die Tragschiene aufgerastet. Anschließend erfolgt die Bearbeitung der Klemmen und deren Verbindungen. Ist das gesamte Projekt fertiggestellt, wird die Anfrage oder der Auftrag per Mausklick auf elektronischem Weg eingegeben.

Die einzelnen Klemmen werden nicht als Grafik auf die Klemmenleiste eingefügt, sondern direkt aus der Datenstruktur abgebildet. Dieses Verfahren bezeichnet man intern mit dem Begriff "DatabasePainting".

Hierdurch ist es nun möglich, die sonst "dummen" Bilder zu lebenden Objekten zu verwandeln. Die Bestückung der Klemme mit einer Markierung wird genauso ermöglicht, wie das Stecken einer Querverbindung. Dem Benutzer kann zu jeder Zeit jedes Objektdetail angezeigt werden, z.B. Querverbindung, Markierung, Schraube etc. Die Ansicht der Klemmen erfolgt photorealistisch. Zur besseren Unterstützung der Auswahl wird über logische Verknüpfungen jedem Artikel ein digitales Foto und die erweiterten Daten beigefügt.

Der spezifische Aufbau einer Klemme erfolgt nach folgendem Prinzip. Die einzelnen Klemmdetails werden in der virtuellen Welt als sog. Token erfaßt und in einer Datenbank hinterlegt. Ein Token ist im Prinzip ein eigenes Teilobjekt mit eigenen Eigenschaften. Bestückt der Benutzer die Klemmenleiste nun mit einer Klemme, werden die Token-Informationen aus der Datenbank gelesen. Mit diesen Werten wird die Klemme von oben nach unten Stück für Stück aufgebaut, positioniert und mit den entsprechenden Eigenschaften versehen. Dabei entsteht der Eindruck eines Bildes am Monitor. Doch der Schein trügt. Eine Klemme besteht aus vielen kleinen Objekten, die für sich gesehen eigene Eigenschaften besitzen, wie z.B. eine Artikelfarbe.

Zwei hauptsächliche Dinge erleichtern die Arbeit: die Geschwindigkeit und die spielerisch aufgebaute Bedienerführung. Die zur Erlernung des Programms notwendige Zeit beschränkt sich auf ein Minimum, da die Windows-Notation durchgängig beachtet wurde.

Nachfolgend soll die Funktionsweise der Erfindung noch näher erläutert werden.

Nach der Erfindung erfolgt die grafische Darstellung der Produkte, wie z.B. einer Reihenklemme, in mehreren Schritten.

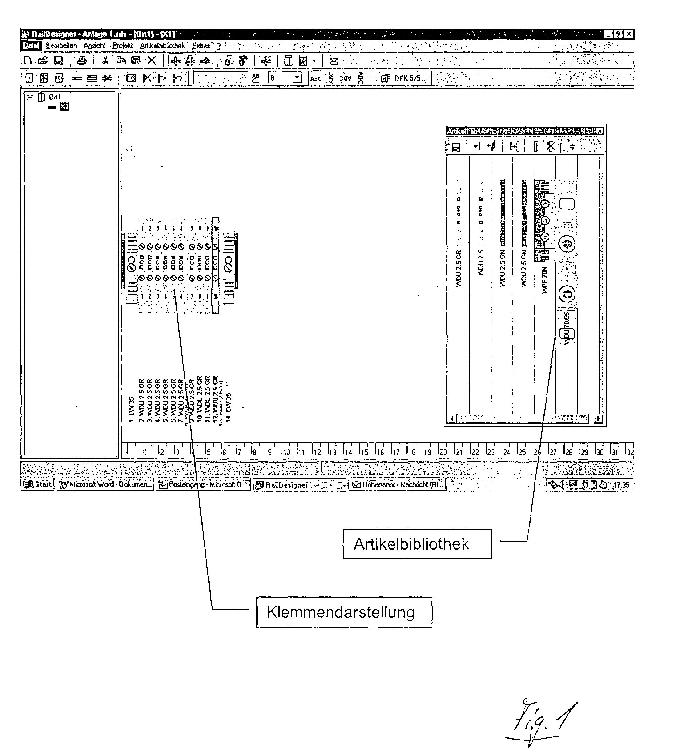

Zunächst wird der benötigte Speicherbereich für das darzustellende Produkt reserviert. Danach folgt der detaillierte Aufbau der Teilelemente in diesem Rahmen von oben nach unten. Hierzu werden aus einer Datenbank die notwendigen Informationen gelesen. Daraufhin werden diese Informationen interpretiert und als kleinstmöglichstes grafisches Element auf dem Bildschirm angezeigt (siehe Fig. 1).

Diese einzelnen grafischen Elemente werden im folgenden als Token bezeichnet.

Die Anzahl der benötigten Token zur Darstellung eines Produktes ist von dessen Komplexität abhängig.

Die Art, die Größe und das Aussehen eines Tokens, d.h. die Eigenschaften des Elementes können durch verschiedene Methoden beliebig modifiziert werden.

Die Summe aller Token bildet die gesamte Darstellung des Produktes auf dem Bildschirm.

Da jedes Token beliebige Formen annehmen kann, ist es möglich, beliebige Produkte auf dem Bildschirm darzustellen und mit aktiver Funktionalität zu versehen.

Alle Token haben Eigenschaften, die sich mittels entsprechender Methoden verändern lassen.

Dies sei anhand eines beispielhaften Vergleiches näher erläutert.

Zur Reservierung eines Darstellungsbereiches wählt der Moderator ein Pin-Board bzw. -brett. In seinem Moderatorenkoffer befinden sich Pappen verschiedener Geometrien und gleicher Farben. Der Moderator möchte auf dem Pin-Board eine Waschmaschine mit den Pappen darstellen. Er blickt dazu auf seinen Bauplan (welcher der Datenbank entspricht) und entnimmt dem Koffer eine entsprechende Pappe. Die Positionen, Farbe und andere benötigte Eigenschaften werden nun der Pappe zugewiesen (d.h. sie wird angemalt, ausgeschnitten, beschriftet usw.). Diesen Vorgang wiederholt der Moderator so lange, bis alle für die Visualisierung notwendigen Elemente auf dem Pin-Board angeheftet sind.

Zur Veränderung der Visualisierung wird eine Pappe entnommen und z.B. mit einer geänderten Beschriftung versehen. Auf diese Weise können auch bei einer fertig dargestellten Waschmaschine einzelne Elemente verändert werden.

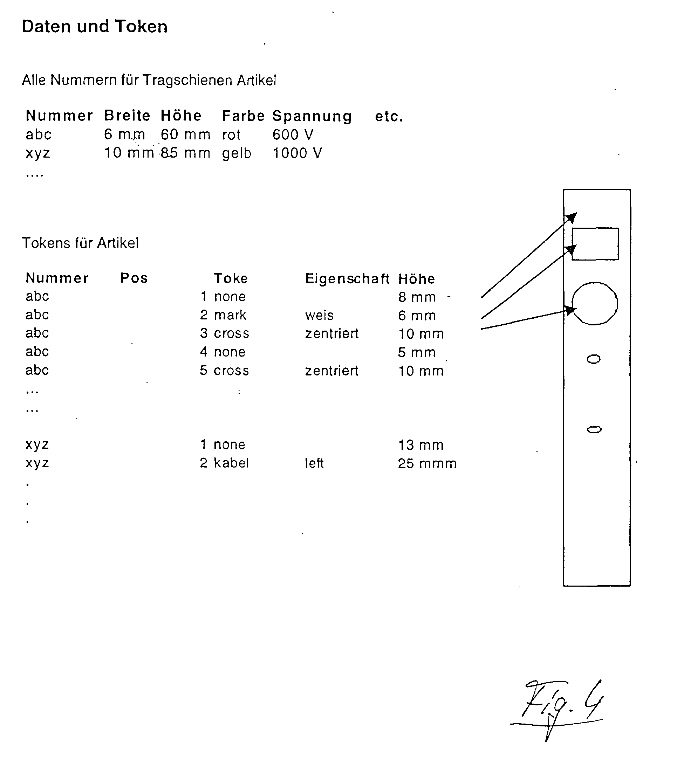

Der vorstehend dargestellten Vorgehensweise entspricht auch die Vorgehensweise der grafischen Darstellung der Produkte am Bildschirm im Rahmen der Erfindung. Die Token entsprechen im Grunde der Pappe. Die Art, die Größe und das Aussehen des Tokens, d.h. die Eigenschaften des Elementes können durch verschiedene Methoden beliebig modifiziert werden. Die Summe der Token bildet die Darstellung des Produktes (z.B. der Reihenklemme) auf dem Bildschirm. Ein Beispiel hierzu ist in Fig. 4 dargestellt. Gezeigt ist in vereinfachender Darstellung eine Reihenklemme mit deren Tokens und deren Eigenschaften.

Dagegen wird beim Stand der Technik üblicherweise zur Darstellung eines Produktes am Bildschirm ein Bildformat benutzt, z.B. das Format TIF, BMP, CDR, WMF oder DXF. Diese Dateiformate unterscheiden sich im wesentlichen durch die Art und Größe der abgespeicherten Bildinformationen. Ein Bild in diesen Formaten wird Punkt für Punkt oder als Vektor gespeichert. Betrachtet man jeden Punkt des Bildes in einem dieser Formate, stellt man fest, daß die einzelnen Punkte keine Intelligenz besitzen. Existierende Programme benutzen statische Bilder aus Tabellen mit kleinen Symbolen zur Visualisierung.

Dagegen besteht der Hauptvorteil des erfindungsgemäßen Verfahrens bzw. des damit realisierbaren Systemes darin, daß eine besonders schnelle Aufbereitung der grafischen Daten möglich ist. Ferner besteht die Möglichkeit dazu, die Eigenschaften eines Produktes den individuellen Bedürfnissen anzupassen.

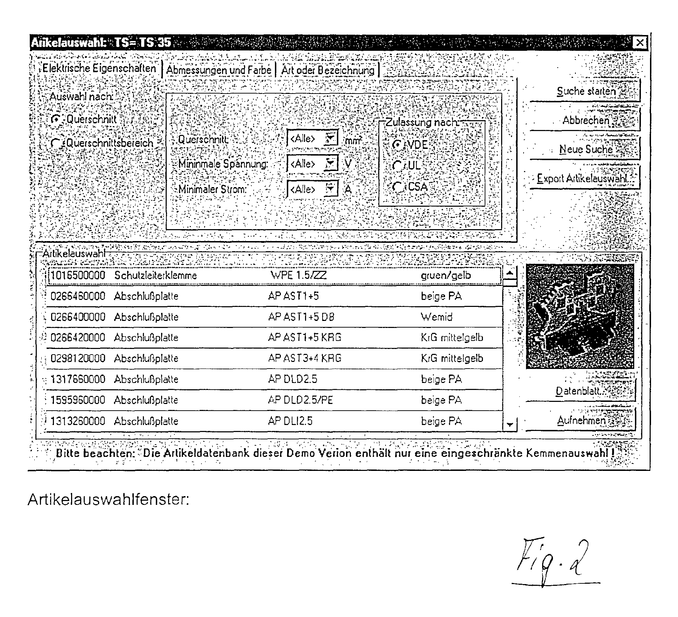

Zur Darstellung neuer Oberflächen muß keine weitere Programmierung erfolgen. Allein durch die Ergänzung der Datenbank mit neuen Artikeln und den zugehörigen Token können neue Designs visualisiert werden (siehe Fig. 1 und 2). Fig. 2 zeigt ein Artikelauswahlfenster. Durch gezielte Eingabe von Suchkriterien kann mittels dieses Suchfensters der gewünschte Artikel gefunden und zu weiteren Bearbeitung des Projektes auf die Tafel der Artikelbibliothek aufgenommen werden.

Dieses Verfahren hat den Vorteil, daß die Darstellung verschiedenartiger Produkte am Bildschirm schnell und realitätsnah erfolgt.

Ferner ist es auch möglich, ein fertig dargestelltes Produkt auf dem Bildschirm durch die Benutzeroberfläche zu modifizieren. Jedes Produkt hat, selbst im Detail, eine eigene Intelligenz, die durch das Token repräsentiert wird. Der Speicherbedarf ist im Vergleich zu Bildformaten der vorstehend genannten Art sehr gering, was sich weiter vorteilhaft in der Bearbeitungsgeschwindigkeit auswirkt. Als Beispiel für ein intelligentes Token sei auf Figur 4 verwiesen. Im oberen Beispiel ist das Token dargestellt, im unteren Beispiel wurde das Token mit einem Markierer mit beliebigen Textinformationen zur Darstellung der Reihenklemme versehen.

Bei der konventionellen Realisierung mit statischen Bildern wie z.B. im BMP-Format, müssen alle möglichen Beschriftungen als Bilddatei im Zugriff sein. Die Anzahl der verschiedenen Möglichkeiten ist demnach sehr groß. Es ist nicht realistisch, alle Kombinationen zu bevorraten.

Beim Einsatz von Token wird dagegen dem Markierer-Token lediglich mitgeteilt, daß die Farbe und der Textinhalt zu ändern sind. Somit ist es problemlos möglich, beliebige Beschriftungsinformationen einzugeben und sofort darzustellen.

Auch der umgekehrte Weg ist nun möglich. Das Token kann im Anwender-Programm zu jeder Zeit seine aktuellen Eigenschaften mitteilen.

Bei produktübergreifenden Funktionen, z.B. bei dem Setzen von Querverbindungen, können die Positionen X, Y und Z eines Tokens beispielsweise zum funktionalen Check benutzt werden.

## Patentansprüche

1. Verfahren zur Simulation und/oder Planung einer Tragschienenbestückung, bei dem mittels einer Softwareroutine die Bestückung einer Tragschiene mit Reihenklemmen und/oder weiteren Elementen und/oder Geräten simuliert wird und auf einer Ausgabeeinrichtung, vorzugsweise einem Bildschirm, einer Recheneinheit dargestellt wird, **dadurch gekennzeichnet, daß** die einzelnen Reihenklemmen und/oder weiteren Elemente und/oder Geräte direkt als Abbildung einer Datenstruktur aus Einzel(-Token)Elementen auf der Tragschiene abgebildet werden.

2. Verfahren nach Anspruch 1, **dadurch gekennzeichnet, daß** die Darstellung der Reihenklemmen und/oder weiteren Elemente und/oder Geräte auf dem Bildschirm photorealistisch erfolgt.

3. Verfahren nach Anspruch 1 oder 2, **dadurch gekennzeichnet, daß** die Klemmen-Einzelelemente in einer Datenbank abgespeichert und beim Simulieren des Aufrastens der Reihenklemme auf die Tragschiene aus der Datenbank nacheinander aus der Datenbank ausgelesen und auf dem Bildschirm darstellt werden.

4. Verfahren nach einem der vorstehenden Ansprüche, **dadurch gekennzeichnet, daß** in einem Speicher ein Speicherbereich für ein darzustellendes Produkt reserviert wird, woraufhin aus einer Datenbank notwendige Informationen ausgelesen, interpretiert und als kleinstmögliches grafisches Element auf dem Bildschirm angezeigt werden, wobei jedes Einzelelement eines der Token darstellt.

5. Verfahren nach einem der vorstehenden Ansprüche, **dadurch gekennzeichnet, daß** jedem Token veränderliche Eigenschaften zugewiesen werden.
